# FASCICULE DE BREVET EUROPEEN

(11) **EP 3 077 218 B1**
(45) Date de publication et mention de la délivrance du brevet: **01.01.2020**
(21) Numéro de dépôt: 14806035.3
(22) Date de dépôt: 07.11.2014
(51) Int. Cl.: B60B 23/08, B60B 3/04, B21D 53/26, F16B 25/10, B21J 5/06

(54) **ROUE DE VEHICULE, ET PROCEDE DE FABRICATION D'UNE TELLE ROUE**
FAHRZEUGRAD UND HERSTELLUNGSVERFAHREN
VEHICLE WHEEL AND METHOD OF MANUFACTURING THE WHEEL

(30) Priorité: 06.12.2013 FR 1362221
(43) Date de publication de la demande: 12.10.2016
(73) Titulaire: PSA Automobiles SA, 78300 Poissy (FR)
(72) Inventeur: PALPACUER, Eric, F-75013 Paris (FR)
(74) Mandataire: Fernandez, Francis Lionel
(86) Numéro de dépôt international: PCT/FR2014/052853
(87) Numéro de publication internationale: WO 2015/082790

(56) Documents cités:
- EP-A1- 1 415 737
- WO-A1-2010/067383
- DE-A1- 3 904 009
- DE-A1- 10 348 427
- DE-A1-102011 118 835
- DE-U1- 29 801 813
- FR-A1- 2 471 291
- JP-A- 2004 345 490
- US-A1- 2001 014 262
- US-A1- 2003 141 754
- Anonymous: "EJOT FDS Schraube - EJOT GmbH & Co. KG - Pressemitteilung", , 25 mai 2009 (2009-05-25), XP055114745, Extrait de l'Internet: URL:http://www.pressebox.de/pressemitteilu ng/ejot-gmbh-co-kg/EJOT-FDS-Schraube/boxid /265233 [extrait le 2014-04-22]

## Description

L'invention concerne une roue de véhicule, en particulier de véhicule automobile. Elle concerne en particulier, mais non exclusivement, une roue de véhicule qui comporte un voile et une jante en matériaux différents. Elle concerne aussi un procédé de fabrication d'une telle roue de véhicule, en particulier de véhicule automobile.

Une roue de véhicule comporte, de manière générale, d'une part, une partie centrale dite « voile », dont la forme galbée permet, avec un minimum de masse, d'obtenir une bonne résistance sans employer des matériaux épais et lourds et, d'autre part, une partie dite « jante » qui reçoit le pneumatique de la roue et qui est sensiblement cylindrique. Le voile de la roue est constitué d'une partie centrale sensiblement plane comportant une portée qui sert à centrer et à fixer la roue sur le moyeu de l'essieu du véhicule, et une partie périphérique, qui peut présenter au moins un rayon de courbure et qui se termine par un bord annulaire cylindrique destiné à la liaison du voile sur la surface interne de la jante.

On connaît les roues avec voile et jante en tôle d'acier, le voile et la jante étant assemblés par un procédé de soudage. De telles roues de tôle acier sont robustes, mais trop lourdes. On connaît aussi les roues avec voile et jante en tôle d'aluminium, le voile et la jante étant aussi assemblés par un procédé de soudage. Ces roues de tôle aluminium sont relativement légères, mais de coût relativement élevé, en particulier parce qu'elles nécessitent de fortes épaisseurs de tôle pour satisfaire les contraintes mécaniques.

La Demanderesse a développé une roue nouvelle de véhicule automobile, dans laquelle le voile est réalisé en tôle d'acier et la jante est réalisée en tôle d'aluminium, le voile et la jante étant rigidement fixés l'un à l'autre par un cordon de soudure obtenu par un procédé de soudage dit « CMT » (acronyme en langue anglaise de « Cold Metal Transfer » qui signifie « Transfert de métal à froid »).

Différents autres procédés d'assemblage d'un voile de roue sur une jante sont connus de l'art antérieur. Ainsi, la jante et le voile peuvent être rivetés, ou sertis par magnétoformage depuis la surface externe de la jante.

On connaît également, selon le document EP 1 415 737 B1, un procédé de fabrication d'une roue de véhicule automobile. La liaison entre la jante et le voile de la roue est réalisée dans la zone de recouvrement, répartie sur la périphérie de la jante, par déformation mécanique à froid locale de la matière des deux parties à assembler. L'opération de déformation crée - dans le sens d'assemblage - derrière la partie à assembler avant une contre dépouille dans la partie à assembler arrière, laquelle relie par adhérence et correspondance de forme la partie à assembler avant à la partie à assembler arrière sans que la partie à assembler arrière soit transpercée dans la zone de déformation. La contre dépouille est réalisée par écartement d'un rivet, plein ou creux, auto poinçonneur, qui est enfoncé à travers la partie à assembler avant dans la partie à assembler arrière.

Le document WO-A-2010 067383 divulgue une roue conforme au préambule de la revendication 1.

Le but de la présente invention est de fournir une roue de véhicule, en particulier mais non exclusivement, une roue de véhicule automobile à voile et jante en matériaux différents, qui permette un gain en masse relativement important par rapport aux roues en tôle acier et qui soit plus économique que les roues en tôle d'aluminium.

Un autre but de la présente invention est de fournir une telle roue de véhicule, qui permette, en conséquence de son allégement, une diminution des rejets de CO₂ du véhicule.

C'est également un but de la présente invention de fournir une telle roue de véhicule, qui soit sans impact sur l'architecture du véhicule, qui soit esthétique et économique.

Enfin, c'est aussi un but de la présente invention de fournir un procédé de fabrication d'une roue de véhicule, qui soit de conception et de mise en œuvre simples, en particulier en utilisant des moyens d'assemblage connus et largement employés en fabrication automobile.

Pour parvenir à ces buts, l'invention fournit une nouvelle roue de véhicule, conforme à la revendication 1.

L'invention a également pour objet un procédé de fabrication d'une roue de véhicule conforme à la revendication 2.

L'invention a enfin pour objet un véhicule, en particulier un véhicule automobile, qui comporte au moins une telle roue.

D'autres buts, avantages et caractéristiques de l'invention apparaîtront dans la description qui suit d'un exemple de réalisation, non limitatif de l'objet et de la portée de la présente demande de brevet, accompagné de dessins dans lesquels :
- la figure 1 est une vue en coupe radiale, schématique, d'une roue de véhicule automobile, selon la présente invention,
- la figure 2 est une vue de face, schématique, de la roue de la figure 1,
- la figure 3 est une vue de détail, en coupe, schématique, d'une vis fluo perceuse, en position vissée dans la zone de liaison du voile avec la jante de la roue des figures 1 et 2,
- les figures 4 et 5 sont des vues en perspectives d'un exemple de vis fluo perceuse utilisée comme moyen d'assemblage et de liaison entre le voile et la jante de la roue objet de la présente invention.

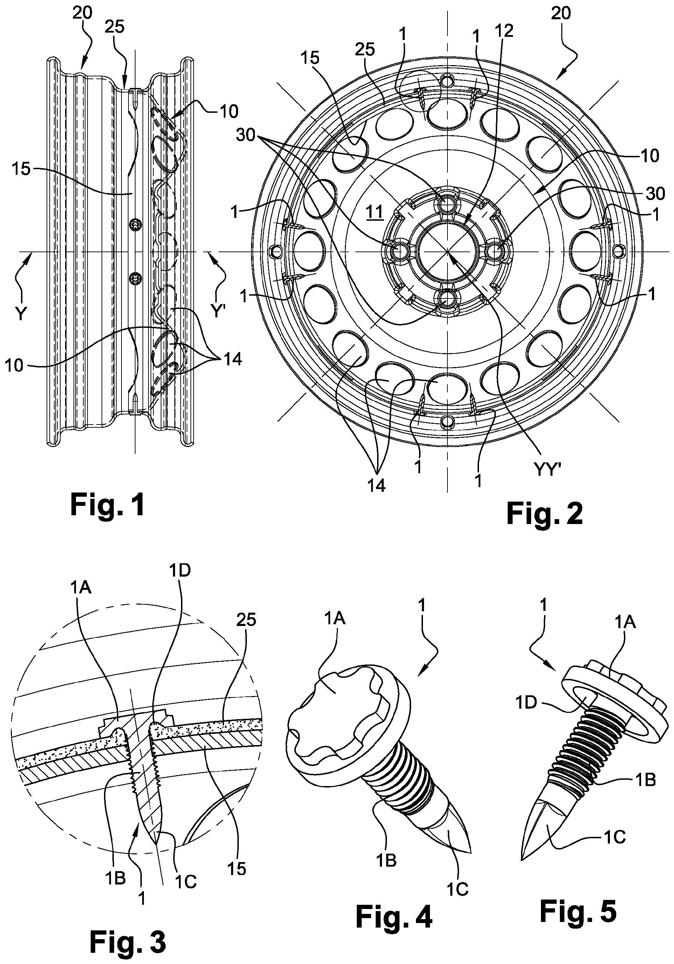

En référence aux dessins des figures 1 et 2, on a représenté une roue de véhicule automobile, d'axe YY', qui est composée d'un voile 10 et d'une jante 20 cylindrique. Le voile 10 est constitué d'une partie centrale 11 sensiblement plane comportant une portée 12 qui sert à centrer et à fixer la roue sur le moyeu de l'essieu (non représenté) du véhicule, et un partie périphérique, qui peut présenter au moins une partie galbée et qui se termine par un bord annulaire 15, cylindrique, destiné à former, par ajustement et concordance de forme avec un tronçon cylindrique 25 de la jante 20 la zone de liaison du voile 10 avec la jante 20. Sur le dessin de la figure 2, la référence 14 désigne des ouvertures circulaires concentriquement réparties dans la partie périphériques du voile 10 pour alléger la roue, et la référence 30 désigne les alésages des vis de fixation de la roue sur le moyeu de l'essieu (non représenté) du véhicule, répartis également de manière concentrique selon un pas angulaire constant.

A titre d'exemple non limitatif de l'objet et de la portée de la présente invention, le voile et la roue sont en matériaux différents, par exemple le voile 10 de roue est obtenu à partir d'un flan ou tôle d'acier, de préférence par emboutissage, et la jante 20 est réalisée à partir d'une tôle d'aluminium.

Selon le principe de la présente invention, le voile 10 est assemblé à la jante 20 au moyen d'une pluralité de vis fluo perceuses, référencées 1 de manière collective, qui sont introduites sur la périphérie de la zone de liaison du voile 10 avec la jante 20, et qui sont dirigées radialement à la roue. Ainsi, les vis fluo perceuses 1 sont vissées dans le tronçon cylindrique 25 de la jante 20 et dans le bord annulaire 15 du voile 10.

En référence aux dessins des figures 3 à 5, une vis fluo perceuse 1 peut avantageusement être une vis de type connu en soi, à tôle mince dite vis « FDS ® » de la société EJOT ®. Ce type de vis est particulièrement adapté à l'assemblage de qualité des tôles minces d'acier et d'aluminium sans marquage des trous, sans pré perçage ou poinçonnage. L'assemblage réalisé avec de telles vis fluo perceuses est performant, sans formation de limaille indésirable. De plus, l'assemblage peut transmettre une résistance à l'arrachement élevée et de grandes charges de poussée.

La vis fluo perceuse, mieux représentée sur les dessins des figures 4 et 5, comprend une tête 1A, un corps fileté 1B et une pointe 1C. Un espace libre 1D, de géométrie optimisée, est ménagé sous la tête de vis 1A, parce qu'une petite quantité de matériau du tronçon cylindrique 25 (figure 3) se dégage dans la direction contraire au vissage et vient se loger dans cet espace 1D.

On notera que le vissage « sans trou » d'une vis FDS® nécessite une visseuse à grande vitesse et une force de pressin précise, le taraudage et le serrage de la vis requérant un couple élevé.

Egalement à titre d'exemple non limitatif de l'objet et de la portée de la présente invention, les vis fluo perceuses 1 peuvent être au nombre de huit, à savoir quatre paires régulièrement réparties à la périphérie de la zone de liaison du voile 10 avec la jante 20.

L'invention concerne aussi un procédé de fabrication d'une roue de véhicule, conforme à celle décrite ci-dessus, et ce procédé comprend les étapes suivantes, prises en combinaison :
- on ajuste de manière « serrée », sans jeu, le voile 10 sur la jante 20 de roue, le bord annulaire 15 de la partie périphérique du voile venant s'emmancher « à force » sur la surface interne du tronçon cylindrique 25 de la jante 20, et
- on réalise l'assemblage du voile 10 ainsi emmanché sur la jante 20 par vissage d'une pluralité de vis fluo perceuses 1 sur la périphérie de ladite zone de liaison du voile 10 avec la jante 20, par exemple de quatre paires de vis fluo perceuses 1, réparties comme représenté sur la figure 2.

La roue décrite ci-dessus, obtenue par le procédé de fabrication également décrit ci-dessus, présente de nombreux avantages, parmi lesquels les avantages suivants :
- elle permet de réaliser un important gain en masse par rapport à une roue réalisée en tôle d'acier, ce gain pouvant atteindre environ 20 %,
- elle permet, du fait de ce gain en masse, de diminuer les émissions de CO₂ du véhicule équipé de telles roues selon l'invention, et
- son montage sur un véhicule est sans impact sur l'architecture du véhicule.
- elle permet, du fait de ce gain en masse, de diminuer les émissions de CO₂ du véhicule équipé de telles roues selon l'invention, et
- son montage sur un véhicule est sans impact sur l'architecture du véhicule.

## Revendications

1. Roue de véhicule, le voile (10) comprenant une partie centrale (11) de fixation sur le moyeu de l'essieu du véhicule et une partie périphérique se terminant par un bord annulaire (15) destiné à former, par ajustement et concordance de forme avec un tronçon cylindrique (25) de la jante (20), la zone de liaison du voile (10) avec la jante (20), dans laquelle le voile (10) est assemblé à la jante (20) au moyen d'une pluralité de vis fluo perceuses (1), qui sont vissées sur la périphérie de ladite zone de liaison du voile (10) avec la jante (20) et qui sont dirigées radialement à la roue, ladite pluralité de vis fluo perceuses (1) étant constituée de plusieurs paires de vis, et lesdites paires de vis étant espacées angulairement d'une valeur constante sur la périphérie de ladite zone de liaison du voile (10) avec la jante (20), ladite roue étant **caractérisée en ce que** ladite pluralité de vis fluo perceuses (1) est constituée de quatre paires de vis, **en ce que** le voile (10) est réalisé en tôle d'acier, la jante (20) est réalisée en tôle d'aluminium et lesdites vis fluo perceuses sont des vis à tôles minces dites vis « sans trou » FDS®.

2. Procédé de fabrication d'une roue de véhicule conforme à la revendication 1, **caractérisé en ce qu'**il comprend les étapes suivantes, prises en combinaison :
- on ajuste de manière « serrée », sans jeu, le voile (10) sur la jante (20) de roue, le bord annulaire (15) de la partie périphérique du voile venant s'emmancher « à force » sur la surface interne du tronçon cylindrique (25) de la jante (20), et
- on réalise l'assemblage du voile (10) ainsi emmanché sur la jante (20) par vissage d'une pluralité de vis fluo perceuses sur la périphérie de ladite zone de liaison du voile (10) avec la jante (20).

3. Véhicule, en particulier véhicule automobile, **caractérisé en ce qu'**il comprend au moins une roue conforme à la revendication 1.

## Patentansprüche

1. Fahrzeugrad, wobei der Radkörper (10) einen zentralen Teil (11) zur Befestigung auf der Nabe der Achse des Fahrzeugs und einen umfänglichen Teil umfasst, der in einem ringförmigen Rand (15) endet, der dazu bestimmt ist, durch Anpassung und Formübereinstimmung mit einem zylindrischen Abschnitt (25) der Felge (20) die Verbindungszone des Körpers (10) mit der Felge (20) zu bilden, in der der Radkörper (10) an die Felge (20) mittels einer Vielzahl fließlochbohrender Schrauben (1) angefügt ist, die auf dem Umfang der Verbindungszone des Radkörpers (10) mit der Felge (20) geschraubt sind und radial zu dem Rad gerichtet sind, wobei die Vielzahl von fließlochbohrenden Schrauben (1) aus mehreren Paaren von Schrauben besteht, und die Paare von Schrauben winkelig um einen konstanten Wert auf dem Umfang der Verbindungszone des Radkörpers (10) mit der Felge (20) beabstandet sind, wobei das Rad **dadurch gekennzeichnet ist, dass** die Vielzahl von fließlochbohrenden Schrauben (1) aus vier Paaren von Schrauben besteht, dass der Radkörper (10) aus Stahlblech hergestellt ist, die Felge (20) aus Aluminiumblech hergestellt ist, und die fließlochbohrenden Schrauben Schrauben mit dünnen Blechen, Schrauben "ohne Loch" genannt, FDS® sind.

2. Herstellungsverfahren eines Fahrzeugrads nach Anspruch 1, **dadurch gekennzeichnet, dass** es die folgenden Schritte umfasst, die kombiniert genommen werden:
- "knappes" Anpassen ohne Spiel des Radkörpers (10) auf der Radfelge (20) wobei sich der ringförmige Rand (15) des umfänglichen Teils des Radkörpers "unter Kraftanwendung" auf der inneren Oberfläche des zylindrischen Abschnitts (25) der Felge (20) aufschrumpft, und
- Zusammenfügen des Radkörpers (10), der derart auf die Felge (20) aufgeschrumpft ist, durch Schrauben einer Vielzahl von fließlochbohrenden Schrauben auf dem Umfang der Verbindungszone des Radkörpers (10) mit der Felge (20).

3. Fahrzeug, insbesondere Kraftfahrzeug, **dadurch gekennzeichnet, dass** es mindestens ein Rad nach Anspruch 1 umfasst.

## Claims

1. A vehicle wheel, the plate (10) including a central part (11) for attachment on the hub of the axle of the vehicle, and a peripheral part terminating by an annular edge (15) intended, through adjustment and agreement of shape with a cylindrical section (25) of the rim (20), to form the connection zone of the plate (10) with the rim (20), in which the plate (10) is assembled to the rim (20) by means of a plurality of flow drill screws (1), which are screwed on the periphery of the said connection zone of the plate (10) with the rim (20) and which are directed radially to the wheel, said plurality of flow drill screws (1) being constituted by several pairs of screws, and said pairs of screws being spaced apart angularly by a constant value on the periphery of the said connection zone of the plate (10) with the rim (20), said wheel being **characterized in that** said plurality of flow drill screws (1) is constituted by four pairs of screws, **in that** the plate (10) is made from steel sheet, the rim (20) is made from aluminium sheet and the said flow drill screws are thin sheet screws designated as "hole-free" screws FDS®.

2. A method for manufacturing a vehicle wheel according to Claim 1, **characterized in that** it includes the following steps, taken in combination:
- the plate (10) is adjusted in a "tight" manner, without play, on the wheel rim (20), the annular edge (15) of the peripheral part of the plate coming to "force"-fit on the internal surface of the cylindrical section (25) of the rim (20), and
- the assembling of the plate (10), thus fitted on the rim (20) is carried out by screwing of a plurality of flow drill screws on the periphery of the said connection zone of the plate (10) with the rim (20).

3. A vehicle, in particular a motor vehicle, **characterized in that** it includes at least one wheel according to Claim 1.
